# EUROPÄISCHE PATENTSCHRIFT

(11) **EP 3 022 751 B1**
(45) Veröffentlichungstag und Bekanntmachung des Hinweises auf die Patenterteilung: **13.09.2017**
(21) Anmeldenummer: 14734770.2
(22) Anmeldetag: 24.06.2014
(51) Int. Cl.: H01H 9/00

(54) **LASTSTUFENSCHALTER, VERFAHREN ZUR MONTAGE EINES LASTUMSCHALTEREINSATZES IM LASTSTUFENSCHALTER UND KEROSINABLASSSCHRAUBE**
ON-LOAD TAP CHANGER, METHOD FOR INSTALLING A LOAD TRANSFER SWITCH INSERT IN THE ON-LOAD TAP CHANGER, AND KEROSENE DRAIN SCREW
CHANGEUR DE PRISES EN CHARGE, PROCÉDÉ DE MONTAGE D'UN BLOC COMMUTATEUR DE RÉGLAGE EN CHARGE DANS LE CHANGEUR DE PRISES EN CHARGE ET BOUCHON DE VIDANGE DE KÉROSÈNE

(30) Priorität: 16.07.2013 DE 102013107547
(43) Veröffentlichungstag der Anmeldung: 25.05.2016
(73) Patentinhaber: Maschinenfabrik Reinhausen GmbH, 93059 Regensburg (DE)
(72) Erfinder: HÖPFL, Klaus, 93142 Maxhütte-Haidhof (DE); WREDE, Silke, 93197 Zeitlarn (DE); ZWIRGLMAIER, Hubert, 93051 Regensburg (DE)
(86) Internationale Anmeldenummer: PCT/EP2014/063250
(87) Internationale Veröffentlichungsnummer: WO 2015/007470

(56) Entgegenhaltungen:
- DD-A1- 214 247
- DE-A1- 2 845 463
- FR-A1- 2 453 480

## Beschreibung

Die vorliegende Erfindung betrifft einen Laststufenschalter. Im Besonderen betrifft die Erfindung einen Laststufenschalter umfassend ein Schaltrohr und ein Ölsaugrohr eines Laststufenschalters, wobei das Ölsaugrohr mittig und koaxial entlang einer Achse innerhalb des Schaltrohrs angeordnet ist. Ferner ist eine Kerosinablassschraube vorgesehen, die derart in einem Boden des Laststufenschalters angebracht ist, dass sie koaxial zur Achse des Ölsaugrohrs, zur Achse des Schaltrohrs und zu einer Achse des Laststufenschalters ist.

Ferner betrifft die Erfindung ein Verfahren zur Montage eines Lastumschaltereinsatzes und eines Ölsaugrohrs in ein Ölgefäß eines Laststufenschalters.

Laststufenschalter (im Englischen "on-load tap-changers", abgekürzt OLTC) sind im Stand der Technik allseits bekannt und gebräuchlich. Sie dienen zur unterbrechungslosen Umschaltung zwischen verschiedenen Wicklungsanzapfungen von Stufentransformatoren.

Solche Laststufenschalter werden in Lastwähler und Lastumschalter mit Wähler unterteilt.

Bei einem Lastumschalter mit Wähler, wie beispielsweise in der deutschen Patentschrift DE 100 55 406 C1 offenbart, ist der Wähler, bestehend aus einem Feinwähler und eventuell einem Vorwähler, unterhalb des Lastumschalters angeordnet. Der Wähler dient zur leistungslosen Anwahl der jeweiligen neuen Wicklungsanzapfung des Stufentransformators, auf die umgeschaltet werden soll. Der Lastumschalter dient zur nachfolgenden schnellen und unterbrechungslosen Umschaltung von der beschalteten auf die neue, vorgewählte Wicklungsanzapfung, die zu beschalten ist.

Lastwähler, wie beispielsweise in der deutschen Patentschrift DE 38 33 126 C2 beschrieben, dienen ebenso wie der Lastumschalter mit Wähler dazu, die Anzapfungen der Regelwicklungen dieser Stufentransformatoren unter Last umzuschalten und damit Spannungsänderungen beim Verbraucher gezielt auszugleichen. Durch den Verzicht auf die Trennung des Lastumschalters vom Wähler lassen sich Lastwähler weniger aufwendig herstellen.

Beide Arten von Laststufenschaltern werden bei der Umschaltung von einem Motorantrieb betätigt. Durch den Motorantrieb wird eine Abtriebs- beziehungsweise Eintriebswelle bewegt, die einen Kraftspeicher aufzieht. Ist der Kraftspeicher vollständig aufgezogen, das heißt gespannt, wird er entklinkt, gibt seine Energie schlagartig frei und betätigt im Zeitraum von Millisekunden (ms) ein Schaltrohr, das dann einen spezifischen Schaltablauf während der Lastumschaltung vollführt. Dabei werden dann verschiedene Schaltkontakte und Widerstandskontakte in bestimmter zeitlicher Reihenfolge betätigt. Die Schaltkontakte dienen dabei zur direkten Verbindung der jeweiligen Wicklungsanzapfung mit der Lastableitung, die Widerstandskontakte zur kurzzeitigen Beschaltung, das heißt Überbrückung mittels eines oder mehrerer Überschaltwiderstände. Vorteilhafterweise werden Vakuumschaltröhren als Schaltelemente zur Lastumschaltung eingesetzt. Dies beruht darauf, dass die Verwendung von Vakuumschaltröhren zur Lastumschaltung eine Lichtbogenbildung im Öl und damit die Ölverschmutzung des Lastumschalteröles verhindert, wie beispielsweise in den deutschen Patentschriften DE 195 10 809 C1 und DE 40 11 019 C1 sowie den deutschen Offenlegungsschriften DE 42 31 353 A1 und DE 10 2007 004 530 A1 beschrieben.

Aus der Patentschrift DD 214 247 B1 ist eine Ablasseinrichtung für Flüssigkeiten an Lastumschaltern für Transformatoren bekannt, bei der das Ölabsaugrohr und die Verschlussschraube entlang einer Achse angeordnet sind. In einem ersten Ausführungsbeispiel wird das Ölabsaugrohr zur Betätigung der Verschlussschraube verwendet. Dazu ist das Ölabsaugrohr über ein formschlüssiges Passstück mit der Verschlussschraube verbunden. Am oberen Ende des Ölabsaugrohrs ist eine Armatur angebracht, welche über ihren Anschlussstutzen mit einer Ölabsaugleitung verbunden wird, wenn die Verschlussschraube geöffnet ist. In einem zweiten Ausführungsbeispiel sind Ölabsaugrohr und Verschlussschraube als eine Einheit ausgebildet. Dazu wird die Armatur drehbar gelagert und durch Dichtungselemente abgedichtet und ein Ölabsaugstutzen ist durch ein Kanalsystem mit dem Ölabsaugrohr verbunden.

Aus der DE 2845463 A1 ist ein Laststufenschalter mit einem Ölsaugrohr, welches im Schaltrohr angeordnet ist bekannt. Das Ölsaugrohr und das Schaltrohr sind über einen Lagerring auf einem Hohlzapfen im Boden des Laststufenschalters angeordnet. Im Hohlzapfen ist eine Öldurchlassbohrung ausgebildet, die das Ölsaugrohr mit dem Inneren des Laststufenschalters verbindet.

Bei bekannten Laststufenschaltern muss bei der Montage des Schaltrohrs und des Ölsaugrohrs in das Ölgefäß des Laststufenschalters das Schaltrohr versetzt und schräg zur Mittelachse des Ölgefäßes in dieses eingebracht werden, um so das Risiko von Beschädigungen an den Betätigungselementen, Schaltkontakten und Schaltsegmenten zu vermeiden. Dies wurde bisher durch ein Spezialmontagewerkzeug vorgenommen, das dem Kunden zu diesem Zweck zusätzlich mitgeliefert werden musste. Die Kerosinablassschraube kann von innen nur nach Ausbau des Schaltrohrs und mit einem sehr langen und somit unpraktischen und unhandlichen Spezialschlüssel betätigt werden, was einen enormen Zeitaufwand und ebenso einen Kostenfaktor darstellt.

Aufgabe der Erfindung ist, einen Laststufenschalter zu schaffen, bei dem die Montage und Demontage des Lastumschaltereinsatzes mit Schaltrohr und des Ölsaugrohrs mit geringem Aufwand, beschädigungsfrei und ohne Verwendung von Spezialwerkzeugen erfolgt.

Diese Aufgabe wird durch einen Laststufenschalter gelöst, der die Merkmale des Anspruchs 1 umfasst.

Eine weitere Aufgabe der Erfindung ist, ein Verfahren zur Montage eines Lastumschaltereinsatzes mit Schaltrohr und eines Ölsaugrohrs in einen Laststufenschalter zu schaffen, bei dem die Montage und Demontage des Schaltrohrs und des Ölsaugrohrs mit geringem Aufwand, beschädigungsfrei und ohne Verwendung von Spezialwerkzeugen durchgeführt wird.

Die obige Aufgabe wird durch ein Verfahren zur Montage eines Schaltrohrs und eines Ölsaugrohrs in einen Laststufenschalter gelöst, das die Merkmale des Anspruchs 6 umfasst.

Der erfindungsgemäße Laststufenschalter umfasst ein Schaltrohr, mit Schaltsegmenten und ein Ölsaugrohr. Das Ölsaugrohr ist dabei mittig entlang einer Achse innerhalb des Schaltrohrs angeordnet. Der Laststufenschalter weist eine Kerosinablassschraube auf, die derart in einem Boden des Laststufenschalters angebracht ist, dass sie koaxial zum Ölsaugrohr, zum Schaltrohr und zum Laststufenschalter ausgerichtet ist.

Der Lagerring ist ohne montiertes Ölsaugrohr bezüglich der Achse A des Laststufenschalters verschoben. Erfindungsgemäß ist ein Lagerring derart mit einem elastischen Element einseitig und radial zu der Achse des Laststufenschalters beaufschlagt, so dass durch das elastische Element eine Verschieberichtung vorgegeben wird und bei der Demontage des Schaltrohrs der Lagerring wieder in die verschobenen Position zurückkehrt. Das Schaltrohr und das Ölsaugrohr sind derart ausgestaltet, dass beide mit dem Lagerring formschlüssig zusammenwirken und um die Achse des Laststufenschalters zentriert sind. Dadurch werden auch der Lastumschaltereinsatz mit dem Schaltrohr und das Ölsaugrohr entlang dieser Achse des Laststufenschalters zentriert. Bevorzugt ist ein Gegenlager am Boden des Laststufenschalters angebracht und nimmt das mit dem Lagerring zusammenwirkende elastische Element auf. Das elastische Element ist in bevorzugter Weise als eine Schraubendruckfeder ausgebildet.

In einer Ausführungsform ist an einem unteren Ende des Ölsaugrohrs ein Saugstutzen angeordnet, der sich aufgrund seiner speziell ausgebildeten Form formschlüssig zwischen dem Lagerring und einer nach innen gerichteten domförmigen Ausprägung des Bodens einfügt beziehungsweise formschlüssig am Lagerring und der domförmigen Ausprägung des Bodens anliegt. Die Kerosinablassschraube befindet sich dabei bevorzugt innerhalb der nach innen gerichteten domförmigen Ausprägung des Bodens.

Erfindungsgemäß wird auch ein Verfahren zur Montage eines Lastumschaltereinsatzes mit Schaltrohr und eines Ölsaugrohrs eines Laststufenschalters beansprucht.

Dabei wird der Lastumschaltereinsatz mit Schaltrohr versetzt zu einer Achse des Laststufenschalters in das Ölgefäß des Laststufenschalters eingesetzt und mittels eines an einem unteren Ende des Schaltrohrs angebrachten Lagers auf einem Lagerring positioniert. Der Lagerring wird einseitig und radial zur Achse des Laststufenschalters mit einem elastischen Element beaufschlagt, wodurch eine Achse des Schaltrohrs und der Lagerring versetzt zur Achse des Laststufenschalters sind. Das Ölsaugrohr wird ebenfalls versetzt zur Achse des Laststufenschalters eingesetzt und dann auf einer in der Achse des Laststufenschalters nach innen ausgebildeten domförmigen Ausprägung eines Bodens abgesetzt. Durch eine Kegelführung, die an einer Innenseite des Schaltrohrs angebracht ist, wird ein geführtes Ansetzen ermöglicht. Das Zentrieren des Schaltrohrs und des Ölsaugrohrs bezüglich der Achse des Laststufenschalters erfolgt dadurch, dass der durch das elastische Element beaufschlagte Lagerring bezüglich der Achse des Laststufenschalters zentriert wird. Dabei wird durch das Zusammenwirken eines am unteren Ende des Ölsaugrohrs angeordneten Saugstutzens mit dem Lagerring und mit der ortsfesten domförmigen Ausprägung des Bodens das elastische Element komprimiert und somit der Lagerring derart verschoben, dass der Lagerring bezüglich der Achse des Laststufenschalters zentriert ausgerichtet wird.

Im montierten Zustand des Lastumschaltereinsatzes fallen die Achse des Schaltrohrs, die Achse des Ölsaugrohrs und die Achse des Laststufenschalters zusammen. Durch das Zusammenfallen der Achsen werden ein Schlüssel und eine Kerosinablassschraube bezüglich der Achse des Laststufenschalters zentriert und mechanisch aufeinander positioniert, so dass der Schlüssel und die Kerosinablassschraube formschlüssig zusammenwirken.

Bei der Demontage des Laststufenschalters wird zuerst das Ölsaugrohr aus dem Schaltrohr entnommen, wodurch sich das komprimierte elastische Element wieder entspannt und damit den Lagerring und das auf dem Lagerring positionierte Schaltrohr in eine zur Achse des Laststufenschalters versetzte Position verschiebt. Nach Entnahme des Ölsaugrohrs kann das Schaltrohr aus dem Ölgefäß entnommen werden. Durch die nun zur Achse des Laststufenschalters versetzte Position des Lagerrings und des Schaltrohrs werden Beschädigungen an den Betätigungselementen, Ableitkontakten, Stufenkontakten und Schaltsegmenten vermieden.

Die Kerosinablassschraube des Laststufenschalters sitzt in einer domförmigen Ausprägung in einem Boden des Laststufenschalters. Die Kerosinablassschraube ist in Richtung einer Achse des Laststufenschalters beweglich montiert und trägt eine scheibenförmige Abdeckung, mit der eine Öffnung für den Kerosinablass im Boden des Laststufenschalters verschlossen oder geöffnet werden kann. Die Betätigung ist der Kerosinablassschraube ist einfach, schnell, sicher und kostengünstig.

Bevorzugt ist ein umlaufender Ring an der Kerosinablassschraube befestigt. Der Ring wirkt mit einem Anschlag im Boden zusammen, um eine Öffnungsbewegung der Kerosinablassschraube zu begrenzen. Weiter bevorzugt ist ein Schlüssel mit einem Schlüsselelement vorgesehen. Der Schlüssel ist in einem Ölsaugrohr des Laststufenhalters angeordnet. Das Schlüsselelement wirkt formschlüssig mit der Kerosinablassschraube zusammen, so dass die Kerosinablassschraube durch Drehung des Ölsaugrohres betätigt werden kann.

Die Abdeckung kann bei geschlossener Kerosinablassschraube mit einer ringförmigen Vertiefung im Boden in Eingriff sein und vermittels einer Dichtung wird die Öffnung für den Kerosinablass verschlossen. Vermittels der Dichtung wird sichergestellt, dass durch die Öffnung verschlossen ist und so im Betrieb das Transformatoröl vom Laststufenschalteröl getrennt ist bzw. nicht vermischt wird.

In einer ersten Ausführungsform ist die Abdeckung ein separates Bauteil, das an der Kerosinablassschraube befestigt ist.

In einer zweiten Ausführungsform bilden die Abdeckung und die Kerosinablassschraube ein einstückiges Bauteil. Auch hier ist bei geschlossener Kerosinablassschraube bevorzugt mittels einer Dichtung die Öffnung für den Kerosinablass verschlossen, Ferner ist die Kerosinablassschraube mit einer ringförmigen Kappe versehen, die mit mindestens einem elastischen Element gegenüber der Abdeckung derart vorgespannt ist, dass die Schlüsselfläche der Kerosinablassschraube für ein Werkzeug unzugänglich ist.

Um die Kerosinablassschraube bei in einem Transformatorgehäuse eingebautem Laststufenschalter öffnen zu können, muss das Ölsaugrohr verdreht werden, was durch eine am oberen Ende des Laststufenschalters angebrachte Schlüsselfläche möglich ist. Die Drehung des Ölsaugrohrs wird über das Schlüsselelement des Schlüssels an die Kerosinablassschraube weitergegeben. Das Schlüsselelement und die Kerosinablassschraube sind formschlüssig miteinander gekoppelt.

Ein Vorteil des erfindungsgemäßen Laststufenschalters ist, dass das Handling bei der Montage und Demontage der Schaltersäule und des Ölsaugrohrs sowie das Öffnen und Schließen der Kerosinablassschraube vereinfacht sind. Somit ist die Inspektion des Laststufenschalters leichter durchführbar Die Betätigung der Kerosinablassschraube bei der Trocknung im Transformatorherstellungsprozess kann ohne Spezialwerkzeug und folglich kostengünstig durchgeführt werden.

Ein weiterer Vorteil des erfindungsgemäßen Laststufenschalters ist, dass auch die zusätzlichen Spezialwerkzeuge, die bisher zur Montage und Demontage des Schaltrohrs und des Ölsaugrohrs notwendig waren, entfallen.

Nachfolgend sind die Erfindung und ihre Vorteile unter Bezugnahme auf die beigefügten Zeichnungen ausführlicher beschrieben. Es zeigen:
- Fig. 1: eine Perspektivansicht einer Ausführungsform des erfindungsgemäßen Laststufenschalters in Form eines dreiphasigen Lastwählers;
- Fig. 2: eine Perspektivansicht eines Lastumschaltereinsatzes des dreiphasigen Lastwählers nach Fig. 1 mit drei am Schaltrohr befestigten Schaltsegmenten;
- Fig. 3: eine andere Perspektivansicht des Lastumschaltereinsatzes nach Fig. 2;
- Fig. 4: eine Schnittdarstellung des Bereichs des Ölsaugrohrs, wobei eine erste Ausführungsform der erfindungsgemäßen Kerosinablassschraube im geschlossenen Zustand dargestellt ist;
- Fig. 5: eine Schnittdarstellung des Bereichs des Ölsaugrohrs aus Fig. 4, wobei die Kerosinablassschraube geöffnet ist;
- Fig. 6: eine Schnittdarstellung des Bereichs des Ölsaugrohrs, wobei eine zweite Ausführungsform der erfindungsgemäßen Kerosinablassschraube im geschlossenen Zustand dargestellt ist;
- Fig. 7: eine Schnittdarstellung des Ölgefäßes, die die Montage des Schaltrohrs im Ölgefäß verdeutlicht;
- Fig. 8: eine Schnittdarstellung des Ölgefäßes während der Montage des Ölsaugrohrs im vorpositionierten Schaltrohr;
- Fig. 9: eine Schnittdarstellung des Ölgefäßes, wobei das Ölsaugrohr im Schaltrohr vorzentriert ist;
- Fig. 10: eine Schnittdarstellung des Ölgefäßes, bei der sich Schaltrohr und Ölsaugrohr in der Endposition befinden und das Schaltrohr und Ölsaugrohr um die Achse des Ölgefäßes zentriert sind; und
- Fig. 11: eine Perspektivansicht einer Ausführungsform des erfindungsgemäßen Laststufenschalters, bei der die Zugänglichkeit der Schlüsselfläche zur Betätigung des Ölsaugrohrs ersichtlich ist.

Für gleiche oder gleich wirkende Elemente der Erfindung werden identische Bezugszeichen verwendet. Ferner werden der Übersicht halber nur Bezugszeichen in den einzelnen Figuren dargestellt, die für die Beschreibung der jeweiligen Figur erforderlich sind. Die dargestellten Ausführungsformen stellen lediglich Beispiele dar, wie der erfindungsgemäße Laststufenschalter und die erfindungsgemäße Kerosinablassschraube ausgestaltet sein können und stellen somit keine abschließende Begrenzung der Erfindung dar.

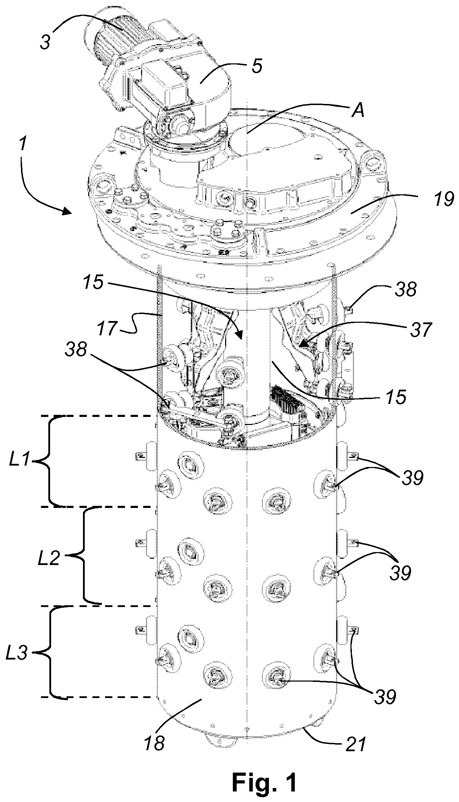

Fig. 1 zeigt eine Perspektivansicht einer Ausführungsform des erfindungsgemäßen Laststufenschalters in Form eines dreiphasigen Laststufenschalters beziehungsweise Lastwählers 1. Der Lastwähler 1 weist einen Antrieb 3, wie beispielsweise einen Elektromotor, mit einem Getriebe 5 auf, der einen nicht dargestellten Kraftspeicher aufzieht. Ist der Kraftspeicher vollständig aufgezogen, das heißt gespannt, wird er entklinkt, gibt seine Energie schlagartig frei und betätigt ein Schaltrohr 15 eines Lastumschaltereinsatzes 14.

Das um eine Achse A des Lastwählers 1 rotierende Schaltrohr 15 ist dabei in einem Ölgefäß 18 gehaltert. Das Ölgefäß 18 ist nach oben hin mit einem Deckel 19 verschlossen und trägt ferner einen Boden 21.

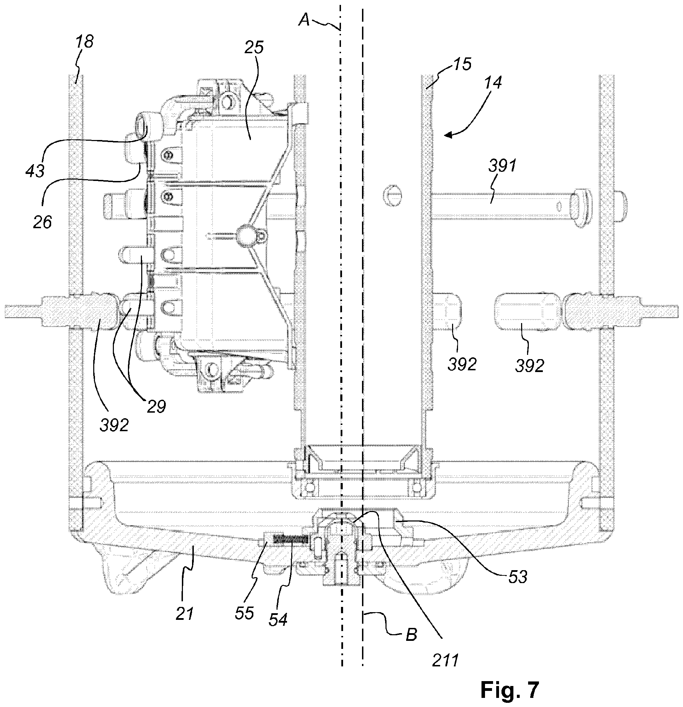

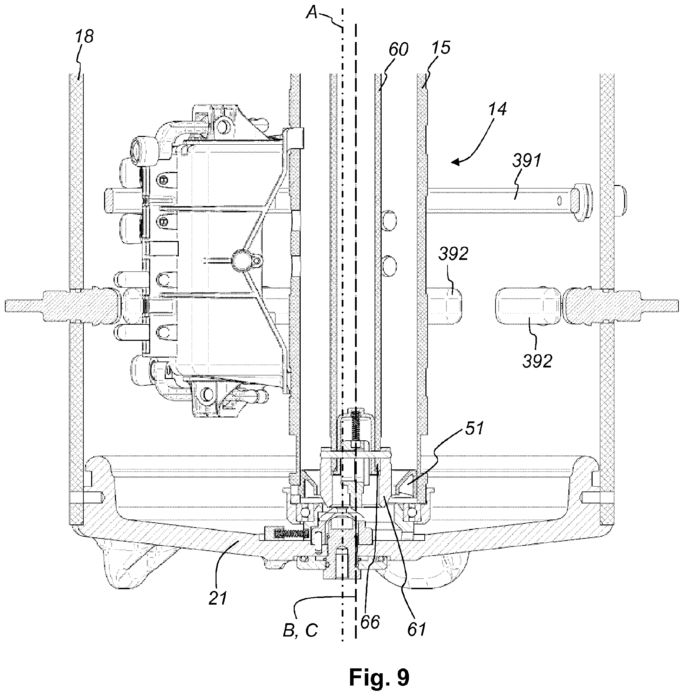

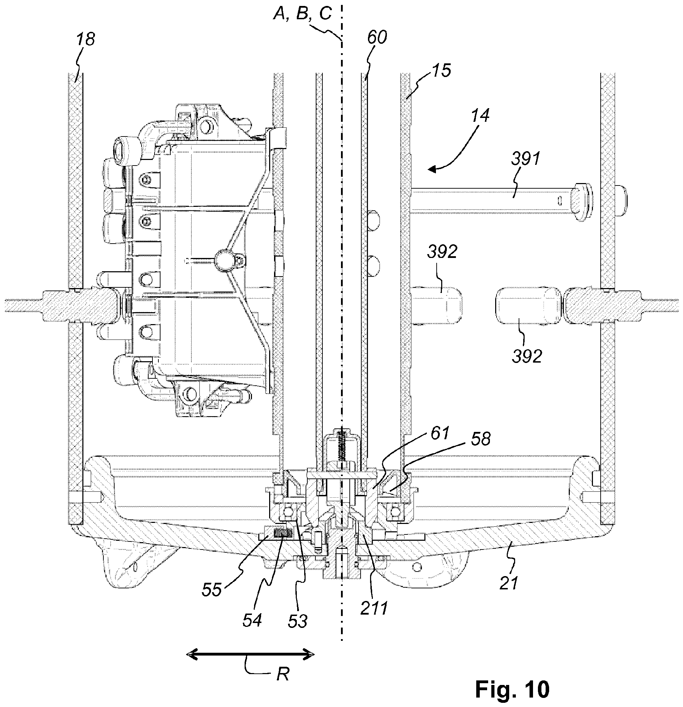

In der Darstellung nach Fig. 1 besitzt der erfindungsgemäße Lastwähler 1 eine erste Phase L1, eine zweite Phase L2 und eine dritte Phase L3, die übereinander im Ölgefäß 18 angeordnet sind. Über den drei Phasen L1, L2, L3 sitzt ein Vorwähler 37. In der hier dargestellten Ansicht sind elektrische Anschlusselemente 38 für Vorwählerkontakte an der Ölgefäßwand 17 des Ölgefäßes 18 vorgesehen. Elektrische Anschlusselemente 39 für Stufenkontakte 392 (siehe Fig. 7-10) der drei Phasen L1, L2, L3 sind ebenfalls dabei derart am Lastwähler 1 angeordnet, dass sie durch die Ölgefäßwand 17 des Ölgefäßes 18 greifen.

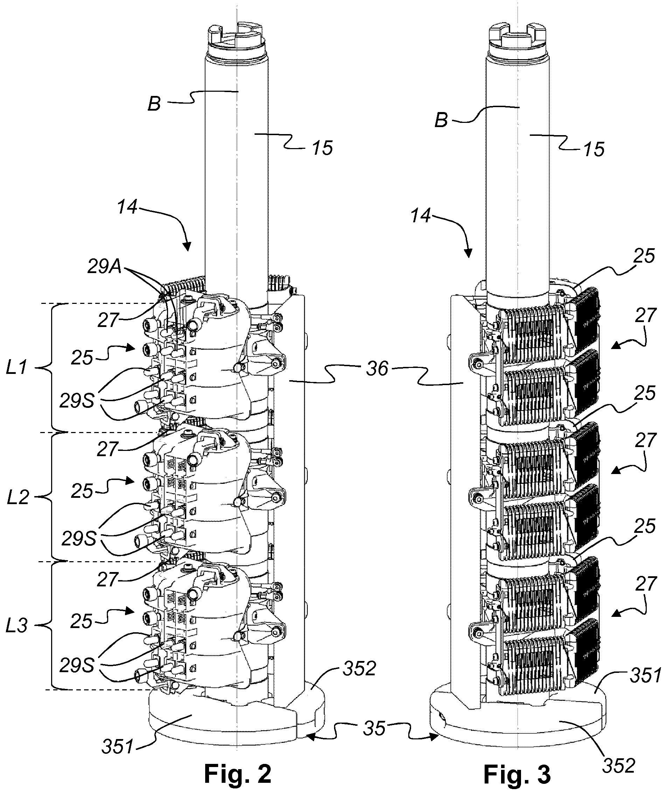

Fig. 2 und 3 zeigen verschiedene Perspektivansichten des Lastumschaltereinsatzes 14 des dreiphasigen Lastwählers 1 nach Fig. 1. Am Schaltrohr 15 des Lastumschaltereinsatzes 14 sind drei Schaltsegmente 25 befestigt, so dass der Lastwähler 1 in die drei Phasen L1, L2, L3 unterteilt ist. Neben den Schaltsegmenten 25 sind am Schaltrohr 15 ebenso Widerstandsanordnungen 27 befestigt, die den einzelnen Phasen L1, L2, L3 des Lastwählers 1 zugeordnet sind. Durch ein Drehen des Schaltrohrs 15 können Kontakte 29S für Stufenkontakte 392 oder Kontakte 29A für Ableitkontakte 391 direkt beschaltet werden, wobei die Kontakte 29S, 29A (nur in der ersten Phase L1) mit entsprechenden und hier nicht dargestellten Ableitkontakten 391 beziehungsweise den ebenfalls nicht dargestellten Stufenkontakten 392 zusammenwirken (siehe hierzu Fig. 7 - 10). Ein vorgegebener Schaltablauf wird mittels der nicht dargestellten Steuerkurven realisiert, in dem eine Mehrzahl von Vakuumschaltröhren (nicht dargestellt) in den einzelnen Schaltsegmenten 25 geöffnet beziehungsweise geschlossen werden.

In der Ausführungsform nach Fig. 2 und 3 ist eine Schwungmasse 35 am Schaltrohr 15 des Lastumschaltereinsatzes 14 montiert. Zudem trägt das Schaltrohr 15 ein massereiches Element 36, wie nachfolgend beschrieben ist. Das Schaltrohr 15 beziehungsweise der Lastumschaltereinsatz 14 definieren eine Achse B, um die sowohl das Schaltrohr 15 als auch der Lastumschaltereinsatz 14 rotieren beziehungsweise schwenken.

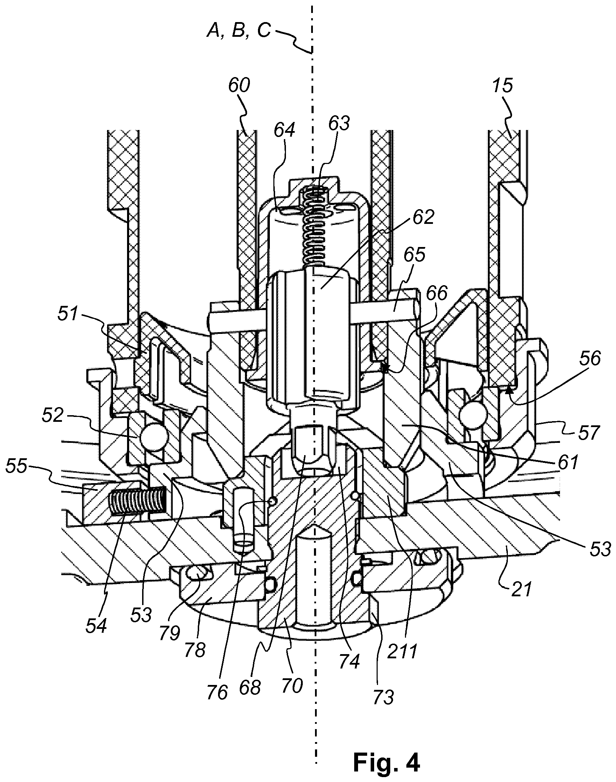

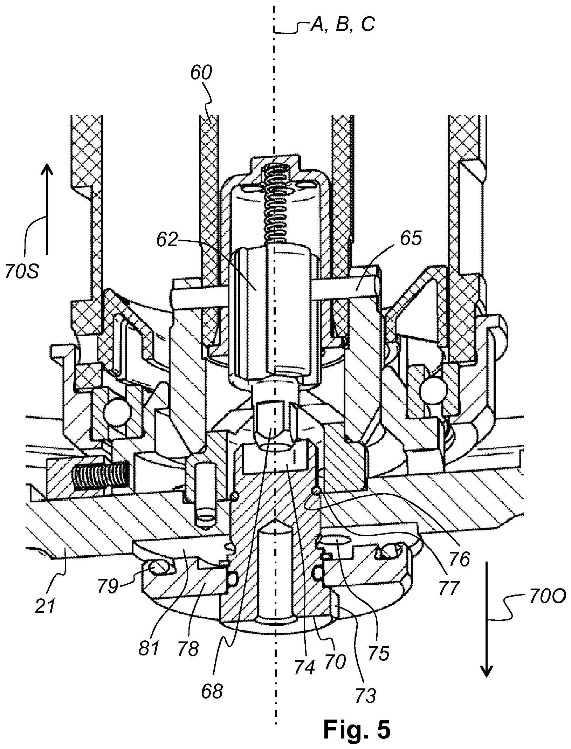

Fig. 4 und 5 zeigen detaillierte Schnittdarstellungen, die die Anordnung einer ersten Ausführungsform der Kerosinablassschraube 70 im Boden 21 des Laststufenschalters 1 und das Zusammenwirken eines Ölsaugrohrs 60 des Laststufenschalters 1 mit der Kerosinablassschraube 70 verdeutlichen. In Fig. 4 ist die Kerosinablassschraube 70 geschlossen und in Fig. 5 ist sie geöffnet.

Das Schaltrohr 15 beziehungsweise der Lastumschaltereinsatz 14 und das Ölsaugrohr 60 sind im Betriebszustand derart im Ölgefäß 18 angeordnet, dass die Achse A des Laststufenschalters 1, die Achse B des Schaltrohrs 15 und eine Achse C des Ölsaugrohrs 60 zusammenfallen. In Fig. 4 ist die Kerosinablassschraube 70 im geschlossen Zustand dargestellt. Die Kerosinablassschraube 70 wirkt formschlüssig mit einem Schlüsselelement 68 eines Schlüssels 62 zusammen. Die Kerosinablassschraube 70 hat ein Gewinde über das durch Drehung mittels des Schlüsselelements 68 ein Öffnen und Schließen möglich ist, dass das die Öffnung 73 freigegeben wird. Eine Begrenzung ist durch den umlaufender Ring 76 gegeben, damit das Schlüsselelement 68 nicht außer Eingriff mit der Kerosinablassschraube 70 kommt. Würde das Schlüsselelement 68 außer Eingriff mit der Kerosinablassschraube 70 gelangen, wäre kein Schließen mehr möglich.

Die Kerosinablassschraube 70 hat eine Schlüsselfläche 73, an der ein Werkzeug (nicht dargestellt) zum Betätigen der Kerosinablassschraube 70 angesetzt werden kann. Die Kerosinablassschraube 70 hat eine Ausformung 74 ausgebildet, in die formschlüssig das Schlüsselelement 68 des Schlüssels 62 eingreift. Bei der in Fig. 4 dargestellten Ausführungsform kann die Kerosinablassschraube 70 über eine Drehung des Ölsaugrohrs 60 geöffnet werden, wobei die Drehung über den Schlüssel 62 und das Schlüsselelement 68 auf die Kerosinablassschraube 70 übertragen wird. Der Schlüssel 62 ist über einen Stift 65 drehfest mit dem Ölsaugrohr 60 und mit dem Saugstutzen 61 gekoppelt. Ebenso kann die Kerosinablassschraube 70 mit einem geeigneten Werkzeug (nicht dargestellt) über die Schlüsselfläche 73 betätigt werden.

Ein elastisches Element 63 wirkt mit einem Gegenlager 64 im Ölsaugrohr 60 zusammen und wirkt derart auf den Schlüssel 62, dass das Schlüsselelement 68 in Eingriff mit der Kerosinablassschraube 70 bei der Montage gelangt. Das elastische Element 63 erleichtert auch die Montage des Ölsaugrohrs 60, da beim Eindrücken des Ölsaugrohrs 60 der Schlüssel 62 mit Schlüsselelement 68 nicht blockiert sondern federnd nachgibt und dann durch Drehung in die Ausformung 74 der Kerosinablassschraube 70 findet Im geöffneten Zustand, wie in Fig. 5 dargestellt, sind die Kerosinablassschraube 70 und der Schlüssel 62 etwas in axialer Richtung B des Schaltrohrs 15 voneinander beabstandet. Der Abstand beziehungsweise der maximale Abstand zwischen der Kerosinablassschraube 70 und dem Schlüssel 62 ist derart bemessen, dass die Ausformung 74 der Kerosinablassschraube 70 und das Schlüsselelement 68 immer noch in Eingriff miteinander sind. Hier ist durch das Drehen der Kerosinablassschraube 70 im Boden 21 des Laststufenschalters 1 mindestens eine Öffnung 75 freigegebenen, über die das Kerosin abgelassen werden kann.

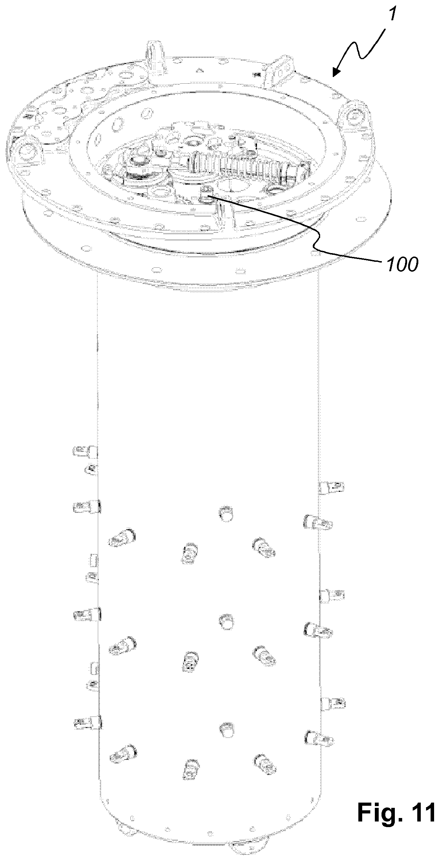

Um sicher zu stellen, dass die Ausformung 74 und das Schlüsselelement 68 in formschlüssigem Eingriff stehen, ist an der Kerosinablassschraube 70 ein umlaufender Ring 76 angebracht, der mit einem zumindest teilweise umlaufenden Anschlag 77 zusammenwirkt. Somit ist die Öffnungsbewegung 700 der Kerosinablassschraube 70 in Richtung der Achse C des Ölsaugrohrs 60 begrenzt und die oben erläuterte Bedingung des räumlichen Bezugs von Ausformung 74 und Schlüsselelement 68 kann eingehalten werden. Unabhängig von der Betätigung der Kerosinablassschraube 70 von unten über die Schlüsselfläche 73 der Kerosinablassschraube 70 oder von oben über eine obere Schlüsselfläche 100 (siehe Fig. 11) des Ölsaugrohrs 60 wird eine an der Kerosinablassschraube 70 gehalterte Abdeckung 78 derart mitbewegt, dass die Öffnung 75 im Boden 21 frei ist und das Kerosin ungehindert abfließen kann. Die Abdeckung 78 ist im Wesentlichen scheibenförmig und trägt eine Dichtung 79, die im geschlossenen Zustand der Kerosinablassschraube 70 mit dem Boden 21 dichtend zusammenwirkt.

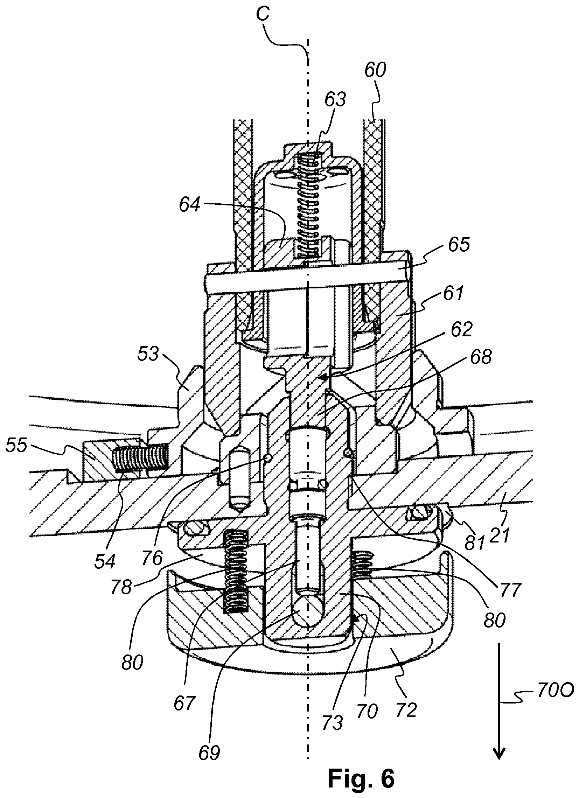

Fig. 6 zeigt eine Schnittdarstellung des Bereichs des Ölsaugrohrs 60, wobei eine zweite Ausführungsform der Kerosinablassschraube 70 im geschlossenen Zustand dargestellt ist. Bei der in Fig. 6 gezeigten Darstellung ist das Schaltrohr 15 aus Gründen der Übersichtlichkeit weggelassen.

Die Kerosinablassschraube 70 ist in dieser Ausführungsform mit einer Kappe 72 versehen, die mit elastischen Elementen 80, beispielsweise Federn 80, in Richtung der Achse C des Ölsaugrohrs 60 derart beaufschlagt und gegenüber der Abdeckung 78 derart vorgespannt ist, dass die Schlüsselfläche 73 der Kerosinablassschraube 70 nicht zugänglich ist, insbesondere unzugänglich für ein Werkzeug ist. Einem Monteurdrückt von unten auf die Kappe 72 und die Schlüsselfläche 73 wird freigegeben, so dass ein geeignetes Werkzeug angesetzt werden kann, um die Kerosinablassschraube 70 zu drehen. Der Schlüssel 62 ist mit der Kerosinablassschraube 70 ebenfalls über ein Schlüsselelement 68, das als Vierkant ausgebildet sein kann, in formschlüssigem Eingriff. Die Betätigung der Kerosinablassschraube 70 erfolgt wie bereits in Fig. 4 und 5 beschrieben. Da aber in bestimmten Schalterausführungen der obere Anschluss des Ölsaugrohrs. 60 nach Endmontage nicht drehbar ist, muss für die Betätigung von unten das Schlüsselelement 68 außer eingriff mit der Kerosinablassschraube 70 gebracht werden. Dazu dient der Querstift 69 der in der Kappe 72 für die Kerosinablassschraube 70 fest sitzt. Beim Hochdrücken der Kappe 72 hebt der Querstift 69 den Stift 67. Der Stift 67 schiebt somit den Schlüssel 62 mit dem Schlüsselelement 68 außer eingriff, so dass ein Mittdrehen des Ölsaugrohrs 60 bei der Betätigung der Kerosinablassschraube 70 verhindert ist. Nach dem Absenken der Kappe 72 mit dem Querstift 69 und dem Stift 67 wird auch mittels des elastischen Elements 63 der Schlüssel 62 für die Betätigung von oben wieder in eingriff gebracht. Die Kerosinablassschraube 70 weist den umlaufenden Ring 76 auf, der mit dem zumindest teilweise umlaufenden Anschlag 77 zusammenwirkt. Der Schlüssel 62, das elastische Element 63 und der Schlüsselkopf 64 werden bei Betätigung der Kappe 70 derart entlang der Achse C des Ölsaugrohrs 60 bewegt, dass der Schlüssel 62 immer im formschlüssigen Eingriff mit der Kerosinablassschraube 70 ist.

Die Fig. 7-10 zeigen Schnittdarstellungen des Ölgefäßes 18 während des Absetzens des Lastumschaltereinsatzes 14 mit Schaltrohr 15 in das Ölgefäß 18 und das Absetzen und Vorzentrieren des Ölsaugrohrs 60 sowie die Endposition des Lastumschaltereinsatzes 14 und des Ölsaugrohrs 60 im Laststufenschalter 1.

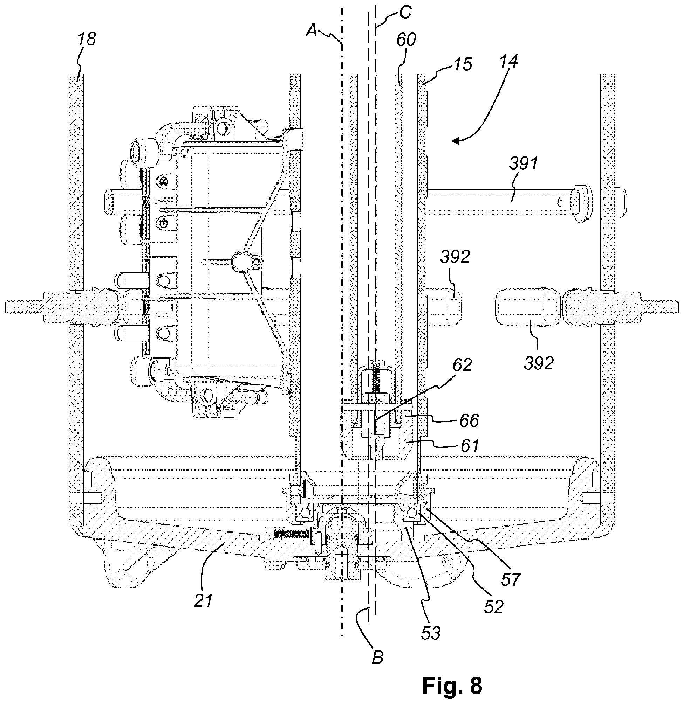

In Fig. 7 ist eine Schnittdarstellung des Ölgefäßes 18 dargestellt, wobei die Phase des Einsetzens des Lastumschaltereinsatzes 14 in das Ölgefäß 18 dargestellt ist. Der Lastumschaltereinsatz 14 umfasst das Schaltrohr 15 mit mindestens einem Schaltsegment 25, eine nicht dargestellte Widerstandsanordnung, die Schwungmasse 35 und das massereiche Element 36 (siehe Fig. 2 und 3). Ein Lagerring 53 ist einseitig und radial mit einem elastischen Element 54 und einem Gegenlager 55, welches das elastische Element 54 aufnimmt, beaufschlagt (siehe hierzu auch Fig.4), somit kann der Lastumschaltereinsatz 14 mit dem Schaltrohr 15 und dem Haltering 57 koaxial zur Achse A des Laststufenschalters 1 auf den Lagerring abgesenkt werden. Dabei werden die Steuerkontakte 29, Steuerrollen 26 und Rollen 43 des Schaltsegmentes problemlos am Ableitkontakte 391 und den Stufenkontakten 392 vorbeigeführt. Ein an einem unteren Ende 66 des Ölsaugrohrs 60 angebrachter Saugstutzen 61 (siehe Fig. 8) liegt formschlüssig zwischen dem Lagerring 53 und einer nach innen gerichteten domförmigen Ausprägung 211 eines Bodens 21 des Ölgefäßes 18 an. Der Lagerring 53 dient ebenfalls der Ausrichtung des Schaltrohrs 15 entlang der Achse A des Laststufenschalters 1, so dass das Schaltrohr 15 und das Ölsaugrohr 60 beide mit dem Lagerring 53 formschlüssig zusammenwirken und um die Achse A des Laststufenschalters 1 zentriert werden, indem die Achse B des Schaltrohrs 15 zur Achse A des Laststufenschalters versetzt wird. Hierzu sitzt das Schaltrohr 15 mit Haltering 57 und Lager 52, der am unteren Ende 56 des Schaltrohrs 15 sitzt, formschlüssig am Lagerring 53 an.

Der Lagerring 53 ist am Boden 21 des Ölgefäßes 18 angeordnet und mit dem elastischen Element 54 einseitig und radial zur Achse A des Laststufenschalters 1 beaufschlagt, dass dieser parallel zur Achse A des Laststufenschalters 1 versetzt ist. Das Schaltrohr 15 des Lastumschaltereinsatzes 14 wird derart versetzt in das Ölgefäß 18 abgesenkt, dass die Achse B des Schaltrohrs 15 zur Achse A des Laststufenschalters 1 parallel versetzt ist. Dies ist erforderlich, damit die Steuerkontakte 29 des Schaltsegments 25 beim Einsetzen des Lastumschaltereinsatzes 14 an Ableitkontakten 391 beziehungsweise Stufenkontakten 392 des Laststufenschalters 1 vorbeigeführt werden können. Beim Einsetzen der Schaltrohrs 15 soll jegliche Beschädigung der Steuerkontakte 29, Ableitkontakte 391 oder Stufenkontakte 392 vermieden werden.

Bezugnehmend auf Fig. 8-10 wird über ein an einem unteren Ende 56 des Schaltrohrs 15 vorgesehener Haltering 57 mit dem Lager 52 das Schaltrohr 15 auf dem Lagerring 53 platziert, so dass die Achse B des Schaltrohrs 15 weiterhin zur Achse A des Laststufenschalters 1 parallel versetzt ist. Das Ölsaugrohr 60 wird mit seiner Achse C versetzt zur Achse B des Schaltrohrs 15 in das Schaltrohr 15 eingesetzt. An seinem unteren Ende 66 hat das Ölsaugrohr 60 einen Saugstutzen 61 angebracht. Über eine Kegelführung 51 am Innendurchmesser des Schaltrohrs 15 und über den Saugstutzen 61 wird ein geführtes Absetzen ermöglicht. Das Ölsaugrohr 60 ist innerhalb des Schaltrohrs 15 angeordnet. Die Achse C des Ölsaugrohrs 60 und die Achse B des Schaltrohrs 15 werden mittels Zentrierring 58 zusammengeführt. Schaltrohr 15 und Ölsaugrohr 60 befinden sich dabei noch versetzt zur Achse A des Laststufenschalters 1.

Durch die spezielle Form des Saugstutzens 61, die so ausgebildet ist, dass sie den Formen der nach innen gerichtet domförmigen Ausprägung 211 des Bodens 21 und des Lagerrings 53 angepasst ist und sich dadurch zwischen diese schiebt, werden das Schaltrohr 15 und das Ölsaugrohr 60 entlang der Achse A des Laststufenschalters 1 zentriert. Das elastische Element 54 wird dabei komprimiert und die domförmige Ausprägung 211 hält das Schaltrohr 15 und das Ölsaugrohr 60 in dieser zentrierten Lage. Die Achse C des Ölsaugrohrs 60, die Achse B des Schaltrohrs 15 und die Achse A des Laststufenschalters 1 fallen zusammen. Das elastische Element 54 wird durch ein Gegenlager 55 aufgenommen und durch dieses bei seiner Bewegung in horizontaler Richtung R begrenzt. Bei der Demontage z.B. einem Service des Ölsaugrohres 60 wird die Zentrierung der Achsen A, B und C mittels des elastischen Elements 54 wieder aufgehoben, wodurch der Lastumschaltereinsatz 14 problemlos entnommen werden kann.

In Fig. 11 ist eine Perspektivansicht einer Ausführungsform des erfindungsgemäßen Laststufenschalters 1 dargestellt, bei der die Zugänglichkeit und Position einer oberen Schlüsselfläche 100 zur Betätigung des Ölsaugrohrs 60 ersichtlich ist. Durch Betätigung der oberen Schlüsselfläche 100 wird das Ölsaugrohr 60 gedreht, wodurch die Kerosinablassschraube 70 vermittels der Drehung des Ölsaugrohrs 60 geöffnet werden kann. Wie bereits oben erwähnt, wird die Drehbewegung des Ölsaugrohrs 60 vermittels des Schlüsselelements 68 des Schlüssels 62 und dessen formschlüssige Kopplung auf die Kerosinablassschraube 70 übertragen.

### Bezugszeichenliste

- 1: Laststufenschalter, Lastwähler
- 3: Antrieb
- 5: Getriebe
- 14: Lastumschaltereinsatz
- 15: Schaltrohr
- 17: Ölgefäßwand
- 18: Ölgefäß
- 19: Deckel
- 21: Boden
- 211: domförmige Ausprägung
- 25: Schaltsegment
- 26: Führungsrollen
- 27: Widerstandsanordnung
- 29: Steuerkontakt
- 35: Schwungmasse
- 351: erste Teilschwungmasse
- 352: zweite Teilschwungmasse
- 36: massereiches Element
- 37: Vorwähler
- 38: elektrisches Anschlusselement für Vorwählerkontakt
- 39: elektrisches Anschlusselement für Stufenkontakt
- 391: Ableitkontakt; Ableit-/ Führungsring
- 392: Stufenkontakte
- 43: Rollen
- 51: Kegelführung
- 52: Lager
- 53: Lagerring
- 54: elastisches Element
- 55: Gegenlager
- 56: unteres Ende des Schaltrohrs
- 57: Haltering
- 58: Zentrierring
- 60: Ölsaugrohr
- 61: Saugstutzen
- 62: Schlüssel
- 63: elastisches Element
- 64: Schlüsselkopf
- 65: Stift
- 66: unteres Ende des Ölsaugrohrs
- 67: Stift
- 68: Schlüsselelement
- 69: Querstift
- 70: Kerosinablassschraube
- 700: Öffnungsbewegung
- 70S: Schließbewegung
- 72: Kappe
- 73: Schlüsselfläche
- 74: Ausformung
- 75: Öffnung
- 76: umlaufender Ring
- 77: Anschlag
- 78: Abdeckung
- 79: Dichtung
- 80: elastisches Element
- 81: ringförmige Vertiefung
- 100: obere Schlüsselfläche
- A: Achse des Laststufenschalters
- B: Achse des Schaltrohrs und Lastumschaltereinsatzes
- C: Achse des Ölsaugrohrs
- L1,: erste Phase
- L2: zweite Phase
- L3: dritte Phase
- R: horizontale Richtung

## Patentansprüche

1. Laststufenschalter (1), umfassend
einen Lastumschaltereinsatz (14) mit einem Schaltrohr (15);
ein Ölsaugrohr (60), das mittig und koaxial entlang einer Achse (B) innerhalb des Schaltrohrs (15) angeordnet ist; und
eine Kerosinablassschraube (70), die derart in einem Boden (21) des Laststufenschalters (1) angebracht ist, dass sie koaxial zu einer Achse (C) des Ölsaugrohrs (60), zur Achse (B) des Schaltrohrs (15) und zu einer Achse (A) des Laststufenschalters (1) ist;
**wobei**
ein Lagerring (53) derart mit einem elastischen Element (54) einseitig und radial zur Achse (A) des Laststufenschalters (1) beaufschlagt ist, dass das Schaltrohr (15) und das Ölsaugrohr (60) beide mit dem Lagerring (53) formschlüssig zusammenwirken und um die Achse (A) des Laststufenschalters (1) zentriert sind.

2. Laststufenschalter (1) nach Anspruch 1, wobei ein Gegenlager (55) am Boden (21) des Laststufenschalters (1) angebracht ist und das mit dem Lagerring (53) zusammenwirkende elastische Element (54) aufnimmt.

3. Laststufenschalter (1) nach einem der vorangehenden Ansprüche, wobei das elastische Element (54) eine Schraubendruckfeder ist.

4. Laststufenschalter (1) nach einem der vorangehenden Ansprüche, wobei ein am unteren Ende (66) des Ölsaugrohrs (60) angeordneter Saugstutzen (61) formschlüssig am Lagerring (53) und an einer domförmigen Ausprägung (211) des Bodens (21) anliegt.

5. Laststufenschalter (1) nach Anspruch 4, wobei die Kerosinablassschraube (70) innerhalb der nach innen gerichteten domförmigen Ausprägung (211) des Bodens (21) vorgesehen ist.

6. Laststufenschalter (1) nach einem der vorangehenden Ansprüche,
wobei die Kerosinablassschraube (70) in der domförmigen Ausprägung (211) im Boden (21) des Laststufenschalters in Richtung einer Achse (A) des Laststufenschalters (1) beweglich montiert ist und eine scheibenförmige Abdeckung (78) trägt, mit der mindestens eine Öffnung (75) für den Kerosinablass im Boden (21) des Laststufenschalters (1) verschließ- und öffenbar ist.

7. Laststufenschalter (1) nach einem der vorangehenden Ansprüche" wobei ein umlaufender Ring (76) an der Kerosinablassschraube (70) befestigt ist, der mit einem Anschlag (77) im Boden (21) zusammenwirkt, um eine Öffnungsbewegung (700) der Kerosinablassschraube (70) zu begrenzen.

8. Laststufenschalter (1) nach einem der vorangehenden Ansprüche, wobei ein Schlüsselelement (68) eines Schlüssels (62) in einem Ölsaugrohr (60) des Laststufenschalters (1) formschlüssig mit der Kerosinablassschraube (70) zusammenwirkt.

9. Laststufenschalter (1) nach einem der vorangehenden Ansprüche, wobei die Abdeckung (78) bei geschlossener Kerosinablassschraube (70) mit einer ringförmigen Vertiefung (81) im Boden (21) in Eingriff ist und vermittels einer Dichtung (79) die Öffnung (75) für den Kerosinablass verschließt.

10. Laststufenschalter (1) nach einem der vorangehenden Ansprüche, wobei die Abdeckung (78) ein separates Bauteil ist, das an der Kerosinablassschraube (70) befestigt ist.

11. Laststufenschalter (1) nach einem der vorangehenden Ansprüche, wobei die Abdeckung (78) und die Kerosinablassschraube (70) ein einstückiges Bauteil bilden.

12. Laststufenschalter (1) nach einem der vorangehenden Ansprüche, wobei eine ringförmige Kappe (72) mit mindestens einem elastischen Element (80) gegenüber der Abdeckung (78) derart vorgespannt ist, dass eine Schlüsselfläche (73) der Kerosinablassschraube (70) für ein Werkzeug unzugänglich ist.

13. Laststufenschalter (1) nach einem der vorangehenden Ansprüche, wobei in der Kappe (72) ein Querstift (69) fest sitzt und mit einem in Richtung des Achse A des Laststufenschalters (1) beweglichen Stift (67) der Kerosinablassschraube (70) zusammenwirkt.

14. Verfahren zur Montage eines Lastumschaltereinsatzes (14) mit einem Schaltrohr (15) und eines Ölsaugrohrs (60) in einen Laststufenschalter (1), umfassend die nachfolgenden Schritte:
- Einsetzen des Lastumschaltereinsatzes (14) mit Schaltrohr (15) in ein Ölgefäß (18) des Laststufenschalters (1), wobei das Schaltrohr (15) zu einer Achse (A) des Laststufenschalters (1) versetzt ist;
- Positionieren des Schaltrohrs (15), das an einem unteren Ende (56) ein Lager (52) aufweist, auf einem Lagerring (53), der einseitig und radial zur Achse (A) des Laststufenschalters (1) mit einem elastischen Element (54) beaufschlagt wird, wobei eine Achse (B) des Schaltrohrs (15) zur Achse (A) des Laststufenschalters versetzt ist;
- Absetzen des Ölsaugrohrs (60) auf einer koaxial zur Achse (A) des Laststufenschalters (1) ortsfest ausgebildeten domförmigen Ausprägung (211) eines Bodens (21), wobei durch eine Kegelführung (51) an einer Innenseite des Schaltrohrs (15) ein geführtes Ansetzen ermöglicht wird; und
- Zentrieren des Schaltrohrs (15) und des Ölsaugrohrs (60) bezüglich der Achse (A) des Laststufenschalters (1), indem der durch das elastische Element (54) beaufschlagte Lagerring (53) durch das Zusammenwirken eines am unteren Ende (66) des Ölsaugrohrs (60) angeordneten Saugstutzens (61) mit dem Lagerring (53) und mit der ortsfesten domförmigen Ausprägung (211) des Bodens (21) bezüglich der Achse (A) des Laststufenschalters (1) zentriert wird.

15. Verfahren nach Anspruch 14, wobei durch das Zentrieren die Achse (B) des Schaltrohrs (15), die Achse (C) des Ölsaugrohrs (60) und die Achse (A) des Laststufenschalters (1) zusammenfallen, so dass ein Schlüssel (62) und eine Kerosinablassschraube (70) bezüglich der Achse (A) des Laststufenschalters (1) zentriert und mechanisch aufeinander positioniert werden.

16. Verfahren nach Anspruch 15, wobei ein Schlüsselelement (68) des Schlüssels (62) mit der Kerosinablassschraube (70) formschlüssig zusammenwirkt.

## Claims

1. On-load tap changer (1), comprising
a load changeover switch insert (14) with a switching tube (15);
an oil suction pipe (60) arranged centrally and coaxially along an axis (B) within the switching tube (15); and
a kerosene drain screw (70) which is so mounted in a base (21) of the on-load tap changer (1) that it is coaxial with an axis (C) of the oil suction pipe (60), the axis (B) of the switching tube (15) and an axis (A) of the on-load tap changer (1);
wherein
a bearing ring (53) is so acted on by a resilient element (54) at one side and radially with respect to the axis (A) of the on-load tap changer (1) that the switching tube (15) and the oil suction pipe (60) both mechanically positively co-operate with the bearing ring (53) and are centred about the axis (A) of the on-load tap changer (1).

2. On-load tap changer (1) according to claim 1, wherein a counter-bearing (55) is mounted at the base (21) of the on-load tap changer (1) and receives the resilient element (54) co-operating with the bearing ring (53).

3. On-load tap changer (1) according to one of the preceding claims, wherein the resilient element (54) is a helical compression spring.

4. On-load tap changer (1) according to any one of the preceding claims, wherein a suction stub pipe (61) arranged at the lower end (66) of the oil suction pipe (66) mechanically positively bears against the bearing ring (53) and against a domed protrusion (211) of the base (21).

5. On-load tap changer (1) according to claim 4, wherein the kerosene drain screw (70) is provided within the inwardly directed domed protrusion (211) of the base (21).

6. On-load tap changer (1) according to any one of the preceding claims, wherein the kerosene drain screw (70 is mounted in the domed protrusion (211) in the base (21) of the on-load tap changer to be movable in the direction of an axis (A) of the on-load tap changer (1) and carries a discoid cover (78) by which at least one opening (75) for the kerosene outlet in the base (21) of the on-load tap changer (1) is closable and openable.

7. On-load tap changer (1) according to any one of the preceding claims, wherein an encircling ring (76) is fastened to the kerosene drain screw (70) and co-operates with an abutment (77) in the base (21) so as to limit an opening movement (700) of the kerosene drain screw (70).

8. On-load tap changer (1) according to any one of the preceding claims, wherein a key element (68) of a key (62) in an oil suction pipe (60) of the on-load tap changer (1) mechanically positively co-operates with the kerosene drain screw (70).

9. On-load tap changer (1) according to any one of the preceding claims, wherein the cover (78) is in engagement with an annular depression (81) in the base (21) when the kerosene drain screw (70) is closed and closes the opening (75) for the kerosene outlet by means of a seal (79).

10. On-load tap changer (1) according to any one of the preceding claims, wherein the cover (78) is a separate component fastened to the kerosene drain screw (70).

11. On-load tap changer (1) according to any one of the preceding claims, wherein the cover (78) and the kerosene drain screw (70) form an integral component.

12. On-load tap changer (1) according to any one of the preceding claims, wherein an annular cap (72) with at least one resilient element (80) is so biased relative to the cover (78) that a key surface (73) of the kerosene drain screw (70) is inaccessible to a tool.

13. On-load tap changer (1) according to any one of the preceding claims, wherein a transverse pin (69) is fixedly seated in the cap (72) and co-operates with a pin (67), which is movable in the direction of the axis (A) of the on-load tap changer (1), of the kerosene drain screw (70).

14. Method of mounting a load changeover switch insert (14) with a switching tube (15) and an oil suction pipe (60) in an on-load tap changer (1), comprising the following steps:
- inserting the load changeover switch insert (14) together with the switching tube (15) into an oil tank (18) of the on-load tap changer (1), wherein the switching tube (15) is offset with respect to an axis (A) of the on-load tap changer (1);
- positioning the switching tube (15), which has a bearing (52) at a lower end (56), on a bearing ring (53) which is acted on at one side and radially with respect to the axis (A) of the on-load tap changer (1) by a resilient element (54), wherein an axis (B) of the switching tube (15) is offset with respect to the axis (A) of the on-load tap changer;
- placing the oil suction pipe (60) on a domed protrusion (211), which is formed in fixed location coaxially with respect to the axis (A) of the on-load tap changer (1), of a base (21), wherein a guided positioning is made possible by a cone guide (51) at an inner side of the switching tube (15); and
- centring the switching tube (15) and the oil suction pipe (60) with respect to the axis (A) of the on-load tap changer (1) in that the bearing ring (53) acted on by the resilient element (54) is centred with respect to the axis (A) of the on-load tap changer (1) by the co-operation of a suction stub pipe (61), which is arranged at the lower end (66) of the oil suction pipe (60), with the bearing ring (53) and with the stationary domed protrusion (211) of the base (21).

15. Method according to claim 14, wherein as a result of the centring the axis (B) of the switching tube (15), the axis (C) of the oil suction pipe (60) and the axis (A) of the on-load tap changer (1) coincide so that a key (62) and a kerosene drain screw (70) are centred with respect to the axis (A) of the on-load tap changer (1) and positioned mechanically one on the other.

16. Method according to claim 15, wherein a key element (68) of the key (62) mechanically positively co-operates with the kerosene drain screw.

## Revendications

1. Changeur de prises en charge (1) comprenant :
- un insert de changeur de charge (14) avec un tube de commutation (15),
- un tube d'aspiration d'huile (60) passant au milieu, co-axialement le long de l'axe (B) dans le tube de commutation (15) et,
- un bouchon d'évacuation de kérosène (70) installé dans le fond (21) du changeur de prises en charge (1) pour être coaxial à l'axe (C) du tube d'aspiration d'huile (60), à l'axe (B) du tube de commutation (15) et à l'axe (A) du changeur de prises en charge (1),
changeur de prises en charge dans lequel
une bague de palier (53) est sollicitée par un élément élastique (54) d'un côté et radialement par rapport à l'axe (A) du changeur de prises en charge (1) de façon que le tube de commutation (15) et le tube d'aspiration d'huile (60) coopèrent avec la bague de palier (53) par une liaison par la forme et soient centrés autour de l'axe (A) du changeur de prises en charge (1).

2. Changeur de prises en charge (1) selon la revendication 1,
**caractérisé en ce que**
le fond (21) du changeur de prises en charge (1) comporte un contre-palier (55) qui reçoit l'élément élastique (54) coopérant avec la bague de palier (53).

3. Changeur de prises en charge (1) selon l'une des revendications précédentes,
**caractérisé en ce que**
l'élément élastique (54) est un ressort hélicoïdal de compression.

4. Changeur de prises en charge (1) selon l'une des revendications précédentes,
**caractérisé en ce qu'**
un ajutage d'aspiration (61) est prévu à l'extrémité inférieure (66) du tube d'aspiration (60) pour s'appliquer par une liaison par la forme contre la bague de palier (53) et contre un relief (211) en forme de dôme du fond (21).

5. Changeur de prises en charge (1) selon la revendication 4,
**caractérisé en ce que**
le bouchon d'évacuation de kérosène (70) est prévu dans le relief (211) en forme de dôme du fond (21) en étant dirigé vers l'intérieur.

6. Changeur de prises en charge (1) selon l'une des revendications précédentes,
**caractérisé en ce que**
le bouchon d'évacuation de kérosène (70) est monté mobile dans le relief en forme de dôme (211) du fond (21) du changeur de prises en charge en direction de l'axe (A) du changeur de prises en charge (1) et porte un obturateur (78) en forme de disque qui ferme et ouvre au moins un orifice (75) pour la sortie de kérosène, dans le fond (21) du changeur de prises en charge (1).

7. Changeur de prises en charge (1) selon l'une des revendications précédentes,
**caractérisé en ce qu'**
un anneau périphérique (76) fixé au bouchon d'évacuation de kérosène (70) coopère avec une butée (77) du fond (21) pour limiter le mouvement d'ouverture (700) du bouchon d'évacuation de kérosène (70).

8. Changeur de prises en charge (1) selon l'une des revendications précédentes,
**caractérisé en ce qu'**
un élément (68) d'une clef (62) coopère dans le tube d'aspiration d'huile (60) du changeur de prises en charge (1) par une liaison par la forme avec le bouchon d'évacuation de kérosène (70).

9. Changeur de prises en charge (1) selon l'une des revendications précédentes,
**caractérisé en ce que**
l'obturateur (78) lorsque le bouchon d'évacuation de kérosène (70) est fermé, est en prise avec une cavité de forme annulaire (81) du fond (21) et ferme l'ouverture (75) d'évacuation de kérosène par l'intermédiaire d'un joint (79).

10. Changeur de prises en charge (1) selon l'une des revendications précédentes,
**caractérisé en ce que**
l'obturateur (78) est une pièce distincte fixée au bouchon d'évacuation de kérosène (70).

11. Changeur de prises en charge (1) selon l'une des revendications précédentes,
**caractérisé en ce que**
l'obturateur (78) et le bouchon d'évacuation de kérosène (70) forment une seule pièce.

12. Changeur de prises en charge (1) selon l'une des revendications précédentes,
**caractérisé en ce qu'**
un capuchon annulaire (72) avec au moins un élément élastique (80) est précontraint par rapport à l'obturateur (78) pour que la surface de clef (73) du bouchon d'évacuation de kérosène (70) soit inaccessible à un outil.

13. Changeur de prises en charge (1) selon l'une des revendications précédentes,
**caractérisé en ce que**
le capuchon (72) comporte solidairement une broche transversale (69) et coopère avec une broche (67) du bouchon d'évacuation de kérosène, cette broche étant mobile dans la direction de l'axe (A) du changeur de prises en charge (1).

14. Procédé de montage d'un insert de changeur de prises en charge (14) comportant un tube de commutation (15) et un tube d'aspiration d'huile (60) dans le changeur de prises en charge (1), procédé comprenant les étapes suivantes consistant à :
- placer un insert de changeur de prises en charge (14) avec un tube de commutation (15) dans la cuve à huile (18) du changeur de prises en charge (1), le tube de commutation (15) étant décalé par rapport à l'axe (A) du changeur de prises en charge (1) ;
- positionner le tube de commutation (15) dont l'extrémité inférieure (56) comporte un palier (52) sur une bague de palier (53) qui est sollicitée d'un côté et radialement par rapport à l'axe (A) du changeur de prises en charge (1) par un élément élastique (54), l'axe (B) du tube de commutation (15) étant décalé par rapport (A) du changeur de prises en charge ;
- poser le tube d'aspiration d'huile (60) sur un relief en forme de dôme (211) réalisé de manière fixe, coaxialement à l'axe (A) du changeur de prises en charge (1) et faisant partie du fond (21), un guidage conique (51) permettant la mise en place guidée sur le côté intérieur du tube de commutation (15) et,
- centrer le tube de commutation (15) et le tube d'aspiration d'huile (60) par rapport à l'axe (A) du changeur de prises en charge (1) en ce que la bague de palier (53) sollicitée par l'élément élastique (54) sera centrée par la coopération d'un ajutage d'aspiration (61) prévu à l'extrémité inférieure (66) du tube d'aspiration d'huile (60) avec la bague de palier (53) et avec le relief en forme de dôme (211) fixe, du fond (21) par rapport à l'axe (A) du changeur de prises en charge (1).

15. Procédé selon la revendication 14,
**caractérisé en ce que**
le centrage de l'axe (B) du tube de commutation (15), l'axe (C) du tube d'aspiration d'huile (60) et l'axe (A) du changeur de prises en charge (1) coïncident de sorte qu'une clef (62) et un bouchon d'évacuation de kérosène (70) sont centrés et positionnés mécaniquement l'un par rapport à l'autre par rapport à l'axe (A) du changeur de prises en charge (1).

16. Procédé selon la revendication 15, **caractérisé en ce qu'**un élément (68) d'une clef (62) coopère par une liaison par la forme avec le bouchon d'évacuation de kérosène (70).
